# EUROPÄISCHE PATENTSCHRIFT

(11) **EP 3 297 506 B1**
(45) Veröffentlichungstag und Bekanntmachung des Hinweises auf die Patenterteilung: **10.06.2020**
(21) Anmeldenummer: 16721010.3
(22) Anmeldetag: 26.04.2016
(51) Int. Cl.: A47J 43/046, F24C 7/08, F24C 15/10

(54) **KOCHSYSTEM**
COOKING SYSTEM
SYSTÈME DE CUISSON

(30) Priorität: 21.05.2015 ES 201530700
(43) Veröffentlichungstag der Anmeldung: 28.03.2018
(73) Patentinhaber: BSH Hausgeräte GmbH, 81739 München (DE)
(72) Erfinder: GARCIA MARTINEZ, Jose Andres, 50014 Zaragoza (ES); LLORENTE GIL, Sergio, 50009 Zaragoza (ES); MARZO ALVAREZ, Teresa del Carmen, 50012 Zaragoza (ES); MIR BEL, Jorge, 50019 Zaragoza (ES); RIVERA PEMAN, Julio, 50410 Cuarte de Huerva (Zaragoza) (ES); SANCHO DIAZ, Francisco Javier, 50009 Zaragoza (ES); VILLANUEVA VALERO, Beatriz, 50011 Zaragoza (ES)
(86) Internationale Anmeldenummer: PCT/IB2016/052357
(87) Internationale Veröffentlichungsnummer: WO 2016/185304

(56) Entgegenhaltungen:
- EP-A1- 2 583 749
- EP-A1- 2 583 750
- EP-A1- 2 802 190
- DE-A1-102006 052 475
- US-A- 3 554 497
- US-A- 5 549 382
- US-A- 5 834 739
- US-A1- 2009 065 500
- US-A1- 2012 223 086

## Beschreibung

Die Erfindung betrifft ein Kochsystem mit zumindest einer Kochfeldvorrichtung nach dem Patentanspruch 1.

Aus dem Stand der Technik ist bereits eine Kochfeldvorrichtung bekannt, bei welcher unterhalb einer Kochfeldplatte zu einem Beheizen eines Gargeschirrs vorgesehene Heizelemente angeordnet sind. Ein oberhalb der Kochfeldplatte angeordneter Verbraucher muss mittels einer separaten Antriebseinheit und/oder manuell angetrieben werden.

Aus den Dokumenten EP 2 583 749 A1, US 3 554 497 A, EP 2 583 750 A1, EP 2 802 190 A1, US 5 549 382 A, DE 10 2006 052475 A1 und US 5 834 739 A sind Kochfeldvorrichtungen bekannt, mit einer Kochfeldplatte und mit zumindest einer Antriebseinheit, welche unterhalb der Kochfeldplatte angeordnet und dazu vorgesehen ist, ein um eine Drehachse rotierendes Magnetfeld oberhalb der Kochfeldplatte zu einem Antrieb eines Verbrauches bereitzustellen.

In den Dokumenten US 2012/0223086 A1 und US 2009/0065500 A1 sind Gargeschirre für Induktionskochfelder offenbart.

Die Aufgabe der Erfindung besteht insbesondere darin, eine gattungsgemäße Vorrichtung mit verbesserten Eigenschaften hinsichtlich eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung betrifft ein Kochsystem mit zumindest einer Kochfeldvorrichtung, insbesondere einer Induktionskochfeldvorrichtung, mit einer Kochfeldplatte und mit zumindest einer Antriebseinheit, welche in einer Einbaulage unterhalb der Kochfeldplatte angeordnet und dazu vorgesehen ist, in wenigstens einem Betriebszustand ein wenigstens im Wesentlichen um zumindest eine Drehachse rotierendes Magnetfeld oberhalb der Kochfeldplatte zu einem Antrieb zumindest eines Verbrauchers bereitzustellen, und mit zumindest einem Gargeschirr, welches zumindest den Verbraucher aufweist. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere der Kochfeldvorrichtung und/oder eines die Kochfeldvorrichtung aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Die Antriebseinheit ist in der Einbaulage insbesondere auf einer einem Bediener abgewandten Seite der Kochfeldplatte angeordnet. Die Antriebseinheit ist insbesondere dazu vorgesehen ist, in wenigstens einem Betriebszustand dem Verbraucher zumindest Antriebsenergie zuzuführen. Die Antriebseinheit ist insbesondere dazu vorgesehen, in wenigstens einem Betriebszustand den Verbraucher mittels des wenigstens im Wesentlichen rotierenden Magnetfelds in Bewegung zu versetzen und/oder in Bewegung zu halten. Die Bewegung ist insbesondere als eine um zumindest eine Drehachse rotierende Rotationsbewegung ausgebildet. Unter einem "wenigstens im Wesentlichen um zumindest eine Drehachse rotierenden" Magnetfeld soll insbesondere ein Magnetfeld verstanden werden, dessen Polarität sich insbesondere im zeitlichen Mittel um die Drehachse bewegt. Beispielsweise könnte das Magnetfeld wenigstens im Wesentlichen kontinuierlich um die Drehachse rotieren. Das Magnetfeld könnte insbesondere schrittweise, insbesondere in kleinen beispielsweise diskreten Stufen, um die Drehachse rotieren. Die Antriebseinheit ist insbesondere dazu vorgesehen, das Magnetfeld auf einer in einer Einbaulage einem Bediener zugewandten Seite der Kochfeldplatte bereitzustellen. Insbesondere durchdringen Magnetfeldlinien des durch die Antriebseinheit bereitgestellten Magnetfelds die Kochfeldplatte und sind vorteilhaft in der Einbaulage oberhalb der Kochfeldplatte vorhanden, insbesondere messbar vorhanden. Unter einem "Verbraucher" soll insbesondere eine Baueinheit verstanden werden, welche sich insbesondere von einer reinen Flüssigkeit unterscheidet, und welche insbesondere dazu vorgesehen ist, durch die Antriebseinheit wenigstens teilweise in Bewegung versetzt zu werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort erreicht werden. Insbesondere kann eine hohe Flexibilität aufgrund einer Vielzahl möglicher Verbraucher erzielt werden. Das Magnetfeld kann insbesondere in effizienter Weise bereitgestellt werden, wodurch insbesondere eine hohe Energieeffizienz ermöglicht werden kann. Ferner kann insbesondere ein geringer Reinigungsaufwand erzielt werden. Insbesondere kann auf Ausnehmungen und/oder Löcher in der Kochfeldplatte verzichtet werden, wodurch insbesondere eine Ansammlung von Verschmutzungen vermieden und/oder eine vorteilhafte Optik erreicht werden können/kann. Ein Gargeschirr kann insbesondere einfach ausgestaltet werden.

Beispielsweise könnte die Antriebseinheit einen Elektromagneten aufweisen, welcher insbesondere dazu vorgesehen sein könnte, in wenigstens einem Betriebszustand ein elektromagnetisches Wechselfeld bereitzustellen, und welcher insbesondere dazu vorgesehen sein könnte, in dem Betriebszustand insbesondere den Verbraucher anzutreiben und/oder den Verbraucher in Bewegung zu halten. Der Verbraucher könnte insbesondere manuell in Bewegung versetzt werden. In einer weiteren Ausgestaltung könnte die Antriebseinheit, insbesondere zusätzlich zu dem Elektromagneten, einen weiteren Elektromagneten aufweisen, welcher insbesondere in wenigstens einem montierten Zustand benachbart zu dem Elektromagneten angeordnet und in wenigstens einem Betriebszustand dazu vorgesehen sein könnte, den Verbraucher in Bewegung zu versetzen. Vorzugsweise wird vorgeschlagen, dass die Antriebseinheit zumindest zwei, insbesondere zumindest drei, vorteilhaft zumindest fünf, besonders vorteilhaft zumindest acht und vorzugsweise eine Vielzahl an Elektromagnete aufweist, welche in wenigstens einem montierten Zustand um die Drehachse herum angeordnet sind. Insbesondere sind die Elektromagnete in dem montierten Zustand wenigstens im Wesentlichen gleichmäßig um die Drehachse herum angeordnet. Die Elektromagnete sind in dem montierten Zustand vorteilhaft in einer Ebene um die Drehachse herum angeordnet. Im Fall einer Antriebseinheit mit zwei Elektromagneten und bei einer Betrachtung einer Projektion in eine Ebene, welche insbesondere senkrecht zu der Drehachse ausgerichtet ist, könnten die Elektromagnete in dem montierten Zustand insbesondere auf unterschiedlichen Seiten der Drehachse angeordnet sein. Bei einer Antriebseinheit mit einer Anzahl von n Elektromagneten, wobei n insbesondere eine ganze Zahl größer oder gleich drei ist, und bei einer Betrachtung einer Projektion in eine Ebene, welche insbesondere senkrecht zu der Drehachse ausgerichtet ist, umgibt insbesondere ein Pfad, welcher insbesondere jeweilige Schwerpunkte einander nächstgelegener Elektromagnete miteinander verbindet, in dem montierten Zustand die Drehachse. Der Pfad bildet in dem montierten Zustand insbesondere ein n-Eck aus, innerhalb welchem die Drehachse insbesondere angeordnet ist. Insbesondere ist die Drehachse in dem montierten Zustand wenigstens im Wesentlichen in einem geometrischen Schwerpunkt des n-Ecks angeordnet. Beispielsweise könnten die Elektromagnete der Antriebseinheit Teil eines Elektromotors sein, welcher insbesondere dazu vorgesehen sein könnte, zumindest einen Permanentmagneten anzutreiben, welcher insbesondere zu der Bereitstellung des Magnetfelds zu dem Antrieb des Verbrauchers vorgesehen sein könnte. Alternativ könnten die Elektromagnete der Antriebseinheit insbesondere direkt zu der Bereitstellung des Magnetfelds oberhalb der Kochfeldplatte vorgesehen sein. Die Elektromagnete könnten beispielsweise in Richtung der Kochfeldplatte gerichtet und/oder gebogen sein, insbesondere um ausgehend von den Elektromagneten in Richtung der Kochfeldplatte weisende magnetische Feldlinien bereitzustellen. Insbesondere könnte die Antriebseinheit pro Elektromagnet zumindest ein Flussleitmittel aufweisen, welches beispielsweise zu der Bereitstellung des Magnetfelds oberhalb der Kochfeldplatte in Richtung der Kochfeldplatte gerichtet und/oder gebogen sein könnte. Dadurch kann das Magnetfeld insbesondere in einfacher Weise bereitgestellt werden, wodurch insbesondere eine preisgünstige und/oder einfache Ausgestaltung erreicht werden kann.

Zudem wird vorgeschlagen, dass die Antriebseinheit zumindest einen Permanentmagneten aufweist, welcher in wenigstens einem montierten Zustand um die Drehachse rotierbar gelagert und in wenigstens einem Betriebszustand zu einer Bereitstellung des Magnetfelds vorgesehen ist. Zumindest ein Teil der Antriebseinheit, insbesondere ein Elektromotor der Antriebseinheit, ist vorzugsweise dazu vorgesehen, das von den Elektromagneten bereitgestellte Magnetfeld in eine Drehbewegung umzuwandeln und vorteilhaft mittels der Drehbewegung den Permanentmagneten anzutreiben. Der Permanentmanget ist in wenigstens einem Betriebszustand insbesondere zu der Bereitstellung des Magnetfelds zu einem Antrieb des Verbrauchers vorgesehen. In einer Einbaulage verläuft die Drehachse insbesondere wenigstens im Wesentlichen durch einen Schwerpunkt des Permanentmagneten. Der Permanentmagnet weist insbesondere zumindest einen magnetischen Südpol und zumindest einen magnetischen Nordpol auf, welche insbesondere ein statisches Magnetfeld bereitstellen. In einer Einbaulage könnte ein Abstand des Nordpols und des Südpols zu der Kochfeldplatte wenigstens im Wesentlichen identisch sein. Alternativ könnten die Pole in einer Einbaulage unterschiedliche Abstände zu der Kochfeldplatte aufweisen. Beispielsweise könnte ein erster Pol, insbesondere der Nordpol und/oder der Südpol, in einer Einbaulage einen geringeren Abstand zu der Kochfeldplatte aufweisen als ein zweiter Pol, insbesondere der Südpol und/oder der Nordpol. Ein Abstand zu der Kochfeldplatte ist insbesondere senkrecht zu der Kochfeldplatte gemessen. Insbesondere weist der Permanentmanget in wenigstens einem montierten Zustand einen Abstand zu der Kochfeldplatte von maximal 3 mm, insbesondere von maximal 1 mm, vorteilhaft von maximal 0,5 mm, vorzugsweise von maximal 0,3 mm und besonders bevorzugt von maximal 0,1 mm auf. Die Kochfeldvorrichtung weist vorteilhaft zumindest ein Gleitelement auf, das dazu vorgesehen ist, in wenigstens einem Betriebszustand eine Reibung und/oder Abschürfung zwischen dem Permanentmagneten und der Kochfeldplatte wenigstens im Wesentlichen zu reduzieren und/oder zu verhindern. Das Gleitelement ist in wenigstens einem montierten Zustand insbesondere an der Kochfeldplatte befestigt. Beispielsweise könnte das Gleitelement als eine Beschichtung ausgebildet sein und insbesondere wenigstens zu einem Großteil aus einem Material mit einem geringen Gleitreibungskoeffizienten, wie beispielsweise Teflon, bestehen. Alternativ oder zusätzlich könnte das Gleitelement als ein Schaumteil ausgebildet und insbesondere mittels einer stoffschlüssigen Verbindung, vorteilhaft mittels einer Klebeverbindung, an der Kochfeldplatte befestigt sein. Dadurch kann insbesondere vorteilhaft einfache und/oder kostengünstige Ausgestaltung erreicht werden.

Weiterhin wird vorgeschlagen, dass die Antriebseinheit zumindest einen Elektromotor aufweist, welcher die Elektromagnete aufweist und zu einem Antrieb des Permanentmagneten vorgesehen ist. Unter einem "Elektromotor" soll insbesondere eine Baueinheit verstanden werden, welche dazu vorgesehen ist, elektrische Energie in Bewegungsenergie umzuwandeln. Dadurch können insbesondere geringe Kosten erreicht werden, da insbesondere auf Standardkomponenten zurückgegriffen werden kann.

Ferner wird vorgeschlagen, dass die Antriebseinheit frei von beweglichen Teilen ist. Insbesondere sind die Elektromagnete der Antriebseinheit zur direkten Bereitstellung des Magnetfelds zu dem Antrieb des Verbrauchers vorgesehen. Dadurch kann insbesondere eine geringe Komplexität erzielt werden. Ferner kann eine Zuverlässigkeit gesteigert werden. Zudem kann eine Geräuschemission reduziert werden.

Unter einem "Gargeschirr" soll insbesondere eine Einheit verstanden werden, welche insbesondere dazu vorgesehen ist, in wenigstens einem Betriebszustand zumindest ein Lebensmittel aufzunehmen und insbesondere in wenigstens einem Betriebszustand in direktem Kontakt mit dem Lebensmittel zu stehen. Das Lebensmittel könnte beispielsweise ein zu garendes Lebensmittel, insbesondere Gargut, und/oder ein insbesondere mechanisch, vorteilhaft in einer über eine Beheizung hinausgehenden Weise, zu bearbeitendes Lebensmittel sein. Das Gargeschirr ist insbesondere zu einem Aufstellen auf einer Kochfeldplatte zu einer Durchführung eines Heizvorgangs vorgesehen. Die Kochfeldvorrichtung weist insbesondere zumindest ein Heizelement, insbesondere zumindest ein Induktionsheizelement, auf, welches insbesondere dazu vorgesehen ist, dem Gargeschirr zu der Durchführung des Heizvorgangs zumindest Energie, insbesondere in Form eines elektromagnetischen Wechselfelds, bereitzustellen und/oder zuzuführen. Dadurch kann insbesondere ein hoher Komfort erreicht werden.

Erfindungsgemäß ist der Verbraucher als eine Lebensmittelbearbeitungseinheit ausgebildet. Unter einer "Lebensmittelbearbeitungseinheit" soll insbesondere eine Einheit verstanden werden, welche dazu vorgesehen ist, in wenigstens einem Betriebszustand zumindest ein Lebensmittel, welches insbesondere in dem Lebensmittelaufnahmeraum angeordnet ist, insbesondere in einer über eine reine Beheizung hinausgehenden Weise, zu bearbeiten, und welche insbesondere zumindest ein Bearbeitungswerkzeug aufweist, welches dazu vorgesehen ist, in wenigstens einem Betriebszustand in direktem Kontakt mit dem Lebensmittel zu stehen. Der Lebensmittelaufnahmeraum ist insbesondere zu einer Aufnahme zumindest eines Lebensmittels vorgesehen. Dadurch kann insbesondere eine hohe Energieeffizienz ermöglicht werden, insbesondere aufgrund einer Bewegung eines zu bearbeitenden Lebensmittels. Eine komfortable und/oder einfache Bedienbarkeit kann insbesondere ermöglicht werden, wobei insbesondere Garparameter in einfacher Weise kontrolliert und/oder beeinflusst werden können. Insbesondere kann eine hohe Flexibilität erzielt werden.

Erfindungsgemäß weist die Lebensmittelbearbeitungseinheit zumindest ein Bearbeitungswerkzeug und zumindest ein Weiterleitungselement auf. Das Weiterleitungselement ist dazu vorgesehen, das von der Antriebseinheit erzeugte Magnetfeld in eine Rotationsbewegung umzuwandeln und an das Bearbeitungswerkzeug weiterzuleiten. Das Bearbeitungswerkzeug ist insbesondere dazu vorgesehen, in wenigstens einem Betriebszustand zumindest ein in dem Lebensmittelaufnahmeraum angeordnetes Lebensmittel zu bearbeiten, insbesondere zu mixen und/oder zu verrühren und/oder zu mahlen und/oder zu zerkleinern und/oder zu vermischen und/oder zu emulgieren und/oder zu kneten und/oder zu zerschneiden. Das Bearbeitungswerkzeug ist insbesondere dazu vorgesehen, in wenigstens einem Betriebszustand zumindest ein in dem Lebensmittelaufnahmeraum angeordnetes Lebensmittel insbesondere ausgehend von zumindest einem ruhenden Zustand in Bewegung zu versetzen und/oder insbesondere ausgehend von zumindest einem bewegten Zustand in Bewegung zu halten. In wenigstens einem Betriebszustand der Lebensmittelbearbeitungseinheit ist insbesondere zumindest ein Teil der Lebensmittelbearbeitungseinheit, insbesondere das Bearbeitungswerkzeug, dazu vorgesehen, in direktem Kontakt mit dem Lebensmittel zu stehen. Die Lebensmittelbearbeitungseinheit ist insbesondere dazu vorgesehen, unterschiedliche Arten und/oder Konsistenzen von Lebensmitteln zu bearbeiten, wie beispielsweise Teig und/oder Flüssigkeit und/oder zumindest teilweise fluide Materialien und/oder Saucen und/oder zumindest teilweise feste Lebensmittel. Insbesondere weist die Lebensmittelbearbeitungseinheit mindestens zwei, insbesondere mindestens drei, vorteilhaft mindestens fünf und vorzugsweise mindestens sieben verschiedene Bearbeitungswerkzeuge auf. Beispielsweise könnte das Weiterleitungselement zumindest einen Induktor, insbesondere zumindest eine Spule, aufweisen. Vorteilhaft weist das Weiterleitungselement zumindest einen Magnet, insbesondere den Permanentmagnet, auf. Das Weiterleitungselement könnte beispielsweise einstückig mit dem Bearbeitungswerkzeug ausgebildet sein, welches insbesondere zumindest einen Magnet aufweisen und insbesondere zu einem Empfang des von der Antriebseinheit erzeugten Magnetfelds vorgesehen sein könnte. Vorteilhaft sind das Weiterleitungselement und das Bearbeitungswerkzeug als separate Elemente ausgebildet und insbesondere in wenigstens einem montierten Zustand miteinander insbesondere mechanisch verbunden. Dadurch kann insbesondere eine preiswerte und/oder funktionstüchtige Ausgestaltung ermöglicht werden.

Erfindungsgemäß weist das Gargeschirr zumindest eine Gehäuseeinheit auf, welche insbesondere zumindest den Lebensmittelaufnahmeraum definiert, in dem insbesondere die Lebensmittelbearbeitungseinheit in wenigstens einem Betriebszustand wenigstens teilweise angeordnet ist. Unter der Wendung, dass die Lebensmittelbearbeitungseinheit in dem Betriebszustand "wenigstens teilweise" in dem Lebensmittelaufnahmeraum angeordnet ist, soll insbesondere verstanden werden, dass in dem Betriebszustand zumindest ein Bestandteil der Lebensmittelbearbeitungseinheit in dem Lebensmittelaufnahmeraum angeordnet ist, wobei zumindest ein weiterer Bestandteil der Lebensmittelbearbeitungseinheit außerhalb des Lebensmittelbearbeitungsraums angeordnet sein könnte. Insbesondere ist in dem Betriebszustand zumindest das Bearbeitungswerkzeug in dem Lebensmittelausnahmeraum angeordnet. Das Weiterleitungselement könnte in dem Betriebszustand insbesondere in dem Lebensmittelbearbeitungsraum oder wenigstens zu einem Großteil außerhalb des Lebensmittelbearbeitungsraums angeordnet sein. Erfindungsgemäß weist die Gehäuseeinheit des Gargeschirrs zumindest ein einem Lebensmittelaufnahmeraum abgewandtes Außengehäuseteil und zumindest ein dem Lebensmittelaufnahmeraum zugewandtes Innengehäuseteil auf, welche einen Zwischenraum definieren, in dem zumindest das Weiterleitungselement der Lebensmittelbearbeitungseinheit in dem Betriebszustand wenigstens teilweise angeordnet ist. Das Weiterleitungselement weist insbesondere zumindest ein Koppelelement auf, welches insbesondere dazu vorgesehen ist, die Antriebsenergie aufzunehmen. Insbesondere weist das Weiterleitungselement zumindest ein Verbindungselement auf, welches insbesondere dazu vorgesehen ist, die Antriebsenergie von dem Koppelement an das Bearbeitungswerkzeug zu übertragen und/oder weiterzuleiten. Das Koppelelement ist insbesondere in dem Zwischenraum angeordnet. Insbesondere ist das Verbindungselement wenigstens teilweise in dem Zwischenraum angeordnet. Das Außengehäuseteil und das Innengehäuseteil sind in wenigstens einem montierten Zustand insbesondere mechanisch miteinander verbunden. Die Gehäuseeinheit weist insbesondere zumindest ein Isolationsmaterial auf, welches in wenigstens einem montierten Zustand zwischen dem Außengehäuseteil und dem Innengehäuseteil angeordnet ist. Der Zwischenraum ist in wenigstens einem montierten Zustand wenigstens zu einem Großteil mit dem Isolationsmaterial gefüllt. Insbesondere besteht das Innengehäuseteil wenigstens zu einem Großteil aus einem Metall, insbesondere einem magnetischen Metall, vorteilhaft aus einem ferromagnetischen Metall. Das Innengehäuseteil könnte beispielsweise wenigstens zu einem Großteil aus Eisen und/oder ferromagnetischem Stahl bestehen. Insbesondere besteht das Außengehäuseteil wenigstens zu einem Großteil aus einem Nichtmetall. Das Außengehäuseteil könnte beispielsweise wenigstens zu einem Großteil aus Kunststoff und/oder Keramik bestehen. Insbesondere besteht das Isolationsmaterial wenigstens zu einem Großteil aus einem Material mit einer geringen Wärmeleitfähigkeit. Das Isolationsmaterial könnte beispielsweise wenigstens zu einem Großteil aus Kunsts und/oder Mineralwolle und/oder Teflon bestehen. In dem Betriebszustand ist das Weiterleitungselement insbesondere wenigstens teilweise von der Gehäuseeinheit umschlossen. Insbesondere ist das Weiterleitungselement in dem Betriebszustand wenigstens teilweise zwischen dem Außengehäuseteil und dem Innengehäuseteil angeordnet. In dem Betriebszustand ist das Weiterleitungselement insbesondere wenigstens teilweise in dem Gargeschirr, vorteilhaft in der Gehäuseeinheit, integriert. Insbesondere ist die Lebensmittelbearbeitungseinheit in dem Betriebszustand unlösbar mit der Gehäuseeinheit verbunden. Beispielsweise könnte die Lebensmittelbearbeitungseinheit in dem Betriebszustand stoffschlüssig mit der Gehäuseeinheit verbunden und/oder wenigstens teilweise in der Gehäuseeinheit integriert sein. Dadurch kann insbesondere eine geschützte Anordnung zumindest eines Teils des Weiterleitungselements, insbesondere zumindest des Koppelelements, erreicht werden. Insbesondere kann eine hohe Stabilität erzielt werden. Insbesondere kann eine geringe Wahrscheinlichkeit eines Anbrennens und/oder eine geringe Quellzeit erzielt werden, wodurch insbesondere eine hohe Beständigkeit und/oder eine langlebige Ausgestaltung eines Gargeschirrs, innerhalb dessen die Lebensmittelbearbeitungseinheit angeordnet ist, erreicht werden kann/können. Durch eine Bewegung eines zu garenden zumindest teilweise fluiden Lebensmittels können insbesondere reproduzierbare Garergebnisse und/oder eine geringe Inhomogenität in dem zu garenden Lebensmittel erreicht werden.

Weiterhin wird vorgeschlagen, dass die Lebensmittelbearbeitungseinheit in dem Betriebszustand in einem Lebensmittelaufnahmeraum des Gargeschirrs angeordnet ist. Insbesondere ist die Lebensmittelbearbeitungseinheit in dem Betriebszustand werkzeuglos lösbar mit der Gehäuseeinheit verbunden. Beispielsweise könnte die Lebensmittelbearbeitungseinheit in dem Betriebszustand mittels zumindest einer Rastverbindung und/oder zumindest einer durch Verriegelung hergestellten Verbindung und/oder zumindest einer durch Klemmung hergestellten Verbindung mit der Gehäuseeinheit verbunden sein. Vorteilhaft ist die Lebensmittelbearbeitungseinheit in dem Betriebszustand mittels einer magnetischen Verbindung mit der Gehäuseeinheit verbunden. Die Antriebseinheit ist insbesondere dazu vorgesehen, in dem Betriebszustand die Lebensmittelbearbeitungseinheit werkzeuglos lösbar, insbesondere mittels der von der Antriebseinheit ausgehenden Magnetkraft, in dem Lebensmittelaufnahmeraum zu halten. Dadurch kann insbesondere eine hohe Flexibilität ermöglicht werden. Insbesondere kann die Lebensmittelbearbeitungseinheit in verschiedenen Gargeschirren verwendet und/oder als Ersatzteil verkauft werden. Insbesondere kann ein zu bearbeitendes Lebensmittel zuverlässig bearbeitet werden.

Vorteilhaft weist das Gargeschirr zumindest eine Gargeschirrgehäuseeinheit auf, welche insbesondere zumindest einen Lebensmittelaufnahmeraum definiert und insbesondere zu einer Erhitzung vorgesehen ist. Die Gargeschirrgehäuseeinheit weist insbesondere zumindest ein Begrenzungselement auf, welche den Lebensmittelaufnahmeraum begrenzt. Insbesondere besteht das Begrenzungselement wenigstens zu einem Großteil aus einem nichtferromagnetischen Material, insbesondere aus einem Metall. Das Begrenzungselement könnte beispielsweise wenigstens zu einem Großteil aus Aluminium bestehen. Insbesondere ist das Begrenzungselement dazu vorgesehen, das von der Antriebseinheit bereitgestellte Magnetfeld wenigstens im Wesentlichen ungehindert passieren zu lassen. Die Gargeschirrgehäuseeinheit weist insbesondere zumindest ein Erhitzungselement auf, welches insbesondere dazu vorgesehen ist, von den Heizelementen erhitzt zu werden und insbesondere mittels der von den Heizelementen zugeführten Energie das Begrenzungselement zu erhitzen. Insbesondere besteht das Erhitzungselement wenigstens zu einem Großteil aus einem ferromagnetischen Material. Das Erhitzungselement könnte beispielsweise wenigstens zu einem Großteil aus Eisen und/oder ferromagnetischem Stahl bestehen. Das Erhitzungselement begrenzt insbesondere zumindest eine Zugangsausnehmung, welche insbesondere dazu vorgesehen ist, das von der Antriebseinheit bereitgestellte Magnetfeld wenigstens im Wesentlichen ungehindert passieren zu lassen. In wenigstens einem montierten Zustand sind das Erhitzungselement und das Begrenzungselement insbesondere aneinander befestigt. Das Erhitzungselement ist in einer Einbaulage insbesondere an einer der Kochfeldplatte zugewandten Seite des Begrenzungselements angeordnet. Insbesondere berührt das Erhitzungselement in wenigstens einem Betriebszustand die Kochfeldplatte wenigstens teilweise.

Insbesondere wird vorgeschlagen, dass die Kochfeldvorrichtung zumindest eine Kochfeld-Bedieneinheit umfasst, welche insbesondere zumindest zu einer Eingabe zumindest eines Bearbeitungsparameters, insbesondere einer Rotationsgeschwindigkeit und/oder ein Rotationsdrehmoment und/oder einer Bearbeitungsstartzeit und/oder einer Bearbeitungsendzeit und/oder einer Bearbeitungsdauer, der Lebensmittelbearbeitungseinheit vorgesehen ist. Die Kochfeld-Bedieneinheit ist insbesondere dazu vorgesehen, einem Bediener zumindest zwei, insbesondere zumindest drei, vorteilhaft zumindest vier und vorzugsweise zumindest fünf Bearbeitungsparameter zur Auswahl bereitzustellen. Insbesondere umfasst die Kochfeldvorrichtung zumindest eine Kochfeld-Steuereinheit, welche insbesondere dazu vorgesehen ist, zumindest die Antriebseinheit anzusteuern. Insbesondere ist die Kochfeld-Steuereinheit, insbesondere mittels einer Ansteuerung der Antriebseinheit, zu einer Steuerung und/oder Regelung des Bearbeitungsparameters der Lebensmittelbearbeitungseinheit vorgesehen. Die Kochfeld-Steuereinheit ist insbesondere dazu vorgesehen, die Antriebseinheit in Abhängigkeit von einer Bedieneingabe mittels einer Kochfeld-Bedieneinheit anzusteuern. Das Gargeschirr könnte insbesondere zumindest einen Sensor umfassen, der dazu vorgesehen sein könnte, zumindest eine Bewegungskomponente, insbesondere zumindest ein Drehmoment und/oder zumindest ein Beschleunigungsmoment und/oder ein Rotationsmoment und/oder eine Rotationsgeschwindigkeit, der Lebensmittelbearbeitungseinheit zu detektieren. Der Sensor könnte beispielsweise dazu vorgesehen sein, zumindest eine Sensorkenngröße, welche insbesondere die Bewegungskomponente der Lebensmittelbearbeitungseinheit charakterisiert, an die Kochfeld-Steuereinheit zu übermitteln. Insbesondere könnte der Sensor zu einer optischen Detektion der Bewegungskomponente der Lebensmittelbearbeitungseinheit vorgesehen und beispielsweise als Fotozelle ausgebildet sein. Alternativ oder zusätzlich könnte der Sensor zu einer Detektion der Bewegungskomponente der Lebensmittelbearbeitungseinheit mittels eines Magnetfelds, welches insbesondere von dem Weiterleitungselement ausgehen könnte, vorgesehen sein. Insbesondere könnte die Kochfeld-Steuereinheit dazu vorgesehen sein, in Abhängigkeit der Sensorkenngröße eine Änderung einer Bewegungskomponente eines zu bearbeitenden Lebensmittels zu ermitteln und insbesondere zumindest einen automatischen Bearbeitungsvorgang und/oder zumindest einen automatischen Garvorgang durchzuführen. Dadurch kann insbesondere ein hoher Bedienkomfort erzielt werden. Vorteilhaft können eine Erhitzung und eine Bearbeitung eines in dem Lebensmittelaufnahmeraum angeordneten Lebensmittels wenigstens im Wesentlichen gleichzeitig erfolgen.

Die Kochfeldvorrichtung und das Kochsystem sollen hierbei nicht auf die oben beschriebene Anwendung und Ausführungsform beschränkt sein. Insbesondere kann die Kochfeldvorrichtung und das Kochsystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochsystem mit einer Kochfeldvorrichtung und mit einem Gargeschirr in einer schematischen Draufsicht,
- Fig. 2: einen vergrößerten Ausschnitt aus Figur 1,
- Fig. 3: das Gargeschirr und die Kochfeldvorrichtung in einer schematischen Schnittdarstellung,
- Fig. 4: ein alternatives und nicht erfindungsgemäßes Gargeschirr und die Kochfeldvorrichtung in einer schematischen Schnittdarstellung,
- Fig. 5: eine Kochfeld-Bedieneinheit der Kochfeldvorrichtung in einer schematischen Draufsicht,
- Fig. 6: einen Permanentmagneten einer Antriebseinheit der Kochfeldvorrichtung und ein Weiterleitungselement einer Lebensmittelbearbeitungseinheit des Gargeschirrs in einer schematischen Darstellung,
- Fig. 7: einen alternativen Permanentmagneten einer Antriebseinheit der Kochfeldvorrichtung und ein alternatives Weiterleitungselement einer Lebensmittelbearbeitungseinheit des Gargeschirrs in einer schematischen Darstellung und
- Fig. 8: eine Antriebseinheit einer alternativen Kochfeldvorrichtung in einer schematischen Draufsicht.

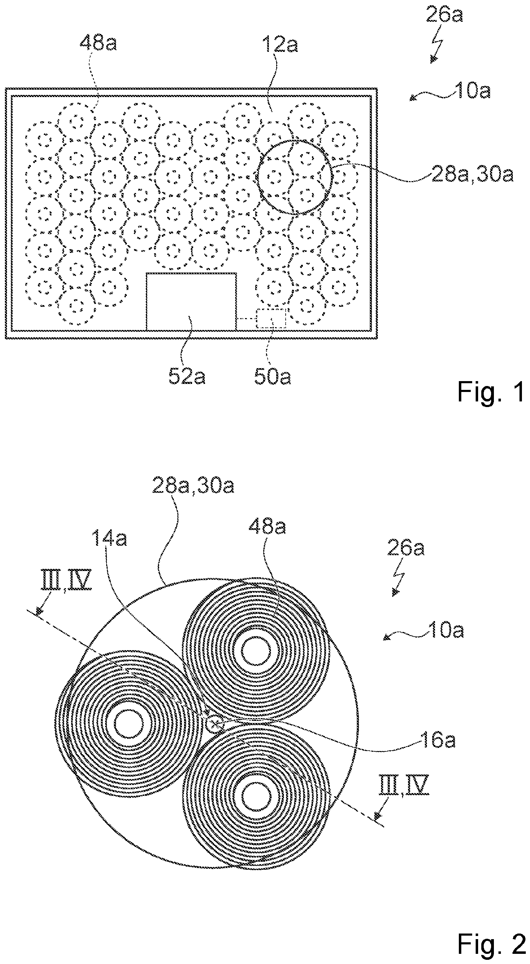

Fig. 1 zeigt ein Kochsystem 26a, das als ein Induktionskochsystem ausgebildet ist, mit einer Kochfeldvorrichtung 10a, die als eine Induktionskochfeldvorrichtung ausgebildet ist.

Die Kochfeldvorrichtung 10a weist eine Kochfeldplatte 12a auf. In einem montierten Zustand bildet die Kochfeldplatte 12a einen Teil eines Kochfeldaußengehäuses aus. Die Kochfeldplatte 12a ist zu einem Aufstellen von Gargeschirr 28a, 30a vorgesehen.

Die Kochfeldvorrichtung 10a weist mehrere Heizelemente 48a auf. Von mehrfach vorhandenen Objekten ist in den Figuren jeweils lediglich eines mit einem Bezugszeichen versehen. Die Heizelemente 48a sind in Form einer Matrix angeordnet. Alternativ könnten die Heizelemente insbesondere ein klassisches Kochfeld ausbilden, bei welchem insbesondere durch eine Position der Heizelemente definierte, fest vorgegebene Heizzonen existieren könnten, welche insbesondere auf der Kochfeldplatte markiert sein könnten.

Im vorliegenden Ausführungsbeispiel weist die Kochfeldvorrichtung 10a achtundvierzig Heizelemente 48a auf. Die Heizelemente 48a sind dazu vorgesehen, auf der Kochfeldplatte 12a oberhalb der Heizelemente 48a aufgestelltes Gargeschirr 28a, 30a zu erhitzen. Die Heizelemente 48a sind als Induktionsheizelemente ausgebildet.

Die Kochfeldvorrichtung 10a weist eine Kochfeld-Bedieneinheit 52a zu einer Eingabe und/oder Auswahl von Betriebsparametern auf, beispielsweise einer Heizleistung und/oder einer Heizleistungsdichte und/oder einer Heizzone. Die Kochfeld-Bedieneinheit 52a ist zu einer Ausgabe eines Werts eines Betriebsparameters an einen Bediener vorgesehen.

Die Kochfeldvorrichtung 10a weist eine Kochfeld-Steuereinheit 50a auf. Die Kochfeld-Steuereinheit 50a ist dazu vorgesehen, in Abhängigkeit von mittels der Kochfeld-Bedieneinheit 52a eingegebener Betriebsparameter Aktionen auszuführen und/oder Einstellungen zu verändern. Die Kochfeld-Steuereinheit 50a regelt in einem Betriebszustand eine Energiezufuhr zu den Heizelementen 48a.

Die Kochfeldvorrichtung 10a weist eine Antriebseinheit 14a auf (vgl. Fig. 2 bis 4). Die Antriebseinheit 14a ist in einer Einbaulage unterhalb der Kochfeldplatte 12a angeordnet. In dem Betriebszustand stellt die Antriebseinheit 14a ein im Wesentlichen um eine Drehachse 16a rotierendes Magnetfeld oberhalb der Kochfeldplatte 12a zu einem Antrieb eines Verbrauchers 18a, 54a bereit.

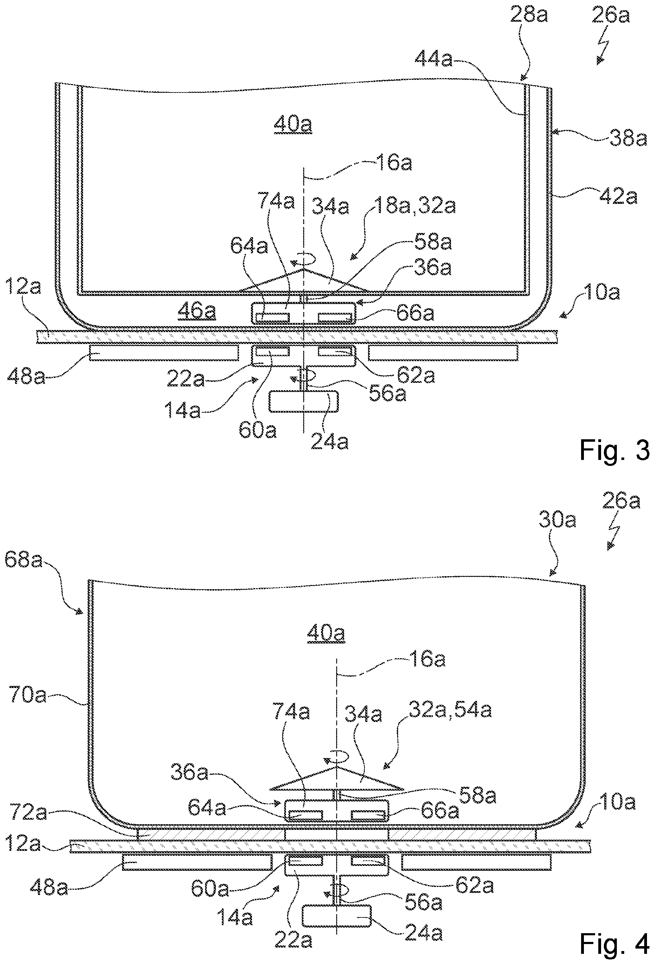

Die Antriebseinheit 14a weist einen Elektromotor 24a auf (vgl. Fig. 3 und 4). Der Elektromotor 24a ist in herkömmlicher Weise aufgebaut. Daher ist der Elektromotor 24a in den Figuren nicht detailliert dargestellt und wird im Folgenden auch nicht detailliert beschrieben. Die Antriebseinheit 14a weist mehrere Elektromagnete 20a auf. Die Elektromagnete 20a sind Teil des Elektromotors 24a. Im vorliegenden Ausführungsbeispiel sind die Elektromagnete 20a nicht dargestellt. In einem montierten Zustand sind die Elektromagnete 20a um die Drehachse 16a herum angeordnet.

Die Antriebseinheit 14a weist einen Permanentmagneten 22a auf. In dem montierten Zustand ist der Permanentmagnet 22a um die Drehachse 16a rotierbar gelagert. Die Antriebseinheit 14a weist eine Welle 56a auf. Die Welle 56a verbindet in dem montierten Zustand den Elektromotor 24a und den Permanentmagneten 22a miteinander.

Der Elektromotor 24a ist zu einem Antrieb des Permanentmagneten 22a vorgesehen. In dem Betriebszustand übermittelt die Welle 56a eine von dem Elektromotor 24a bereitgestellte Rotationsbewegung an den Permanentmagneten 22a. Der Permanentmagnet 22a erzeugt in dem Betriebszustand das Magnetfeld zu dem Antrieb des Verbrauchers 18a, 54a.

Das Kochsystem 26a weist zwei mögliche Gargeschirre 28a, 30a auf (vgl. Fig. 1 bis 4). Ein erstes erfindungsgemäßes Gargeschirr 28a und ein zweites nicht erfindungsgemäßes Gargeschirr 30a. Die Gargeschirre 28a, 30a sind jeweils zu einem Aufstellen auf der Kochfeldplatte 12a vorgesehen. Das erste Gargeschirr 28a der Gargeschirre 28a, 30a und das zweite Gargeschirr 30a der Gargeschirre 28a, 30a sind voneinander verschieden ausgebildet. Jedes der Gargeschirre 28a, 30a weist einen Verbraucher 18a, 54a auf. Im Folgenden wird lediglich eines der Gargeschirre 28a, 30a beschrieben.

Das Gargeschirr 28a, 30a definiert einen Lebensmittelaufnahmeraum 40a. Der Verbraucher 18a, 54a ist als eine Lebensmittelbearbeitungseinheit 32a ausgebildet. Die Lebensmittelbearbeitungseinheit 32a weist ein Bearbeitungswerkzeug 34a auf. Das Bearbeitungswerkzeug 34a ist zu einer Bearbeitung von in dem Lebensmittelaufnahmeraum 40a angeordneten Lebensmitteln vorgesehen. In dem montierten Zustand ist das Bearbeitungswerkzeug 34a in dem Lebensmittelaufnahmeraum 40a angeordnet.

Die Lebensmittelbearbeitungseinheit 32a weist ein Weiterleitungselement 36a auf. Das Weiterleitungselement 36a wandelt in dem Betriebszustand das von der Antriebseinheit 14a erzeugte Magnetfeld in eine Rotationsbewegung um.

Das Weiterleitungselement 36a und der Permanentmagnet 22a sind zueinander korrespondierend ausgebildet. In dem Betriebszustand wechselwirken das Weiterleitungselement 36a und der Permanentmagnet 22a miteinander. Der Permanentmagnet 22a weist zumindest einen ersten magnetischen Pol 60a und einen zumindest zweiten magnetischen Pol 62a auf. Das Weiterleitungselement 36a weist einen zumindest ersten magnetischen Pol 64a und einen zumindest zweiten magnetischen Pol 66a auf.

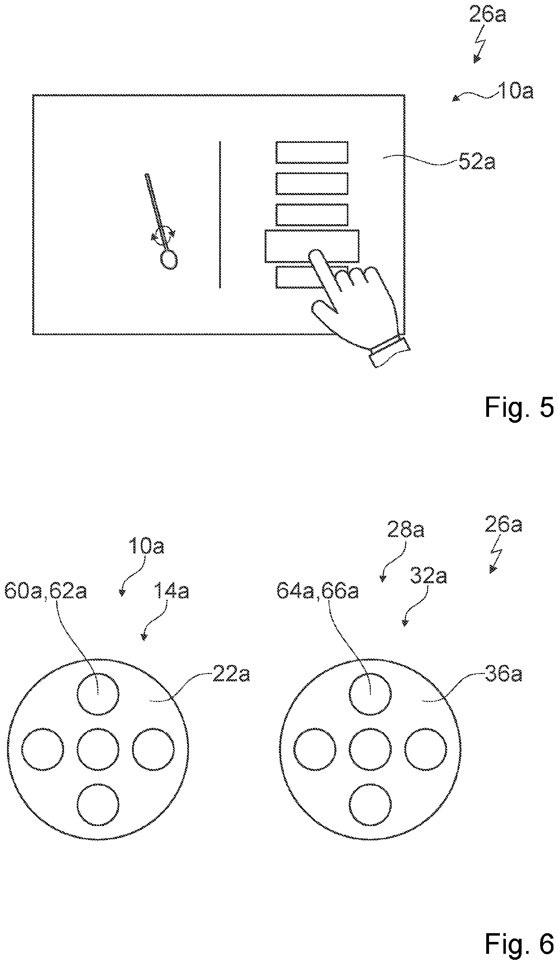

In einem ersten Fall (vgl. Fig. 6) könnten die magnetischen Pole 60a, 62a des Permanentmagneten 22a insbesondere untereinander im Wesentlichen identisch ausgebildet sein. Die magnetischen Pole 64a, 66a des Weiterleitungselements 36a könnten insbesondere untereinander im Wesentlichen identisch ausgebildet sein. Beispielsweise könnten die magnetischen Pole 60a, 62a des Permanentmagneten 22a in der Einbaulage der Kochfeldplatte 12a zugewandt angeordnet. Die magnetischen Pole 64a, 66a des Weiterleitungselements 36a könnten beispielsweise in der Einbaulage der Kochfeldplatte 12a zugewandt angeordnet sein. Beispielsweise könnten die magnetischen Pole 60a, 62a des Permanentmagneten 22a als Südpole und die magnetischen Pole 64a, 66a des Weiterleitungselements 36a als Nordpole ausgebildet sein. Alternativ könnten die magnetischen Pole 60a, 62a des Permanentmagneten 22a als Nordpole und die magnetischen Pole 64a, 66a des Weiterleitungselements 36a als Südpole ausgebildet sein.

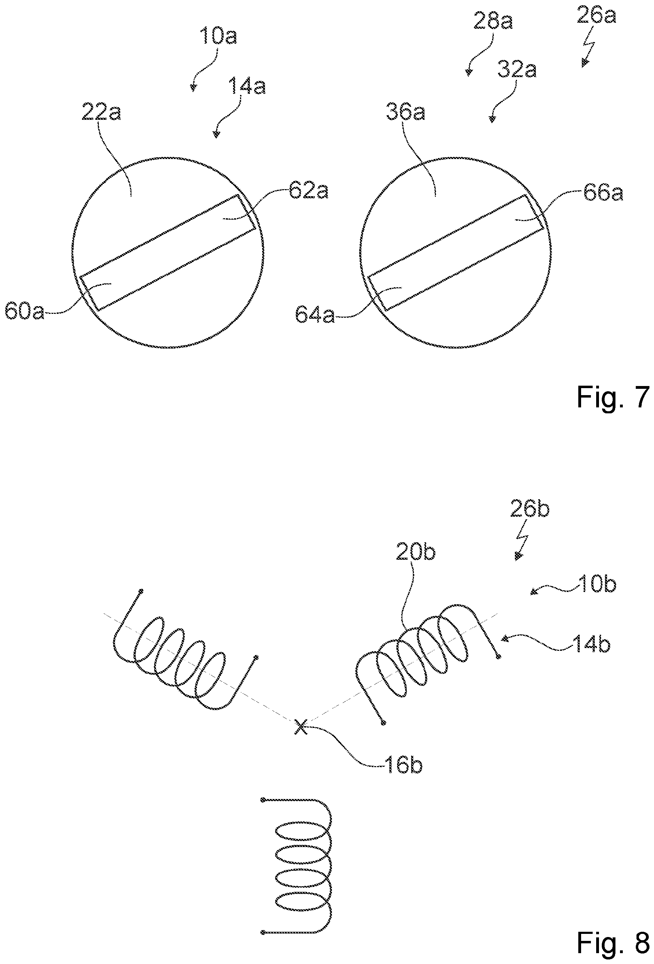

In einem zweiten Fall (vgl. Fig. 7) könnten die magnetischen Pole 60a, 62a des Permanentmagneten 22a insbesondere verschieden ausgebildet sein. Der erste magnetische Pol 60a des Permanentmagneten 22a könnte als Nordpol und der zweite magnetische Pols 62a des Permanentmagneten 22a könnte als Südpol ausgebildet sein. Die magnetischen Pole 64a, 66a des Weiterleitungselements 36a könnten insbesondere verschieden ausgebildet sein. Der erste magnetische Pol 64a des Weiterleitungselements 36a könnte als Südpol und der zweite magnetische Pol 66a des Weiterleitungselements 36a könnte als Nordpol ausgebildet sein.

Beispielsweise könnten der Permanentmagnet und das Weiterleitungselement mehrere, insbesondere separat voneinander ausgebildete und/oder angeordnete, erste magnetische Pole und mehrere zweite magnetische Pole aufweisen, insbesondere in dem ersten Fall.

Das Weiterleitungselement 36a weist ein Koppelelement 74a auf. Das Koppelelement 74a ist in dem Betriebszustand zu einer Aufnahme des von der Antriebseinheit 14a bereitgestellten Magnetfelds vorgesehen. Das Weiterleitungselement 36a weist ein Verbindungselement 58a auf. Das Verbindungselement 58a verbindet in dem montierten Zustand das Koppelelement 74a und das Bearbeitungswerkzeug 34a miteinander. In dem Betriebszustand leitet das Weiterleitungselement 36a die Rotationsbewegung an das Bearbeitungswerkzeug 34a weiter. Das Verbindungselement 58a ist als eine Welle ausgebildet.

Im Folgenden wird zunächst das erste Gargeschirr 28a beschrieben (vgl. Fig. 3). Hierbei wird die Bezeichnung "erstes" der Einfachheit halber weggelassen. Das Gargeschirr 28a weist eine Gehäuseeinheit 38a auf. Die Gehäuseeinheit 38a weist ein dem Lebensmittelaufnahmeraum 40a abgewandtes Außengehäuseteil 42a auf. Die Gehäuseeinheit 38a weist ein dem Lebensmittelaufnahmeraum 40a zugewandtes Innengehäuseteil 44a auf.

Das Außengehäuseteil 42a und das Innengehäuseteil 44a definieren einen Zwischenraum 46a. Das Gargeschirr 28a weist ein Isolationsmaterial (nicht dargestellt) auf. Der Zwischenraum 46a ist zu einem Großteil mit dem Isolationsmaterial gefüllt. In dem Betriebszustand ist das Weiterleitungselement 36a der Lebensmittelbearbeitungseinheit 32a teilweise in dem Zwischenraum 46a angeordnet. Das Koppelelement 74a ist in dem montierten Zustand in dem Zwischenraum 46a angeordnet.

Das Verbindungselement 58a ist in dem montierten Zustand teilweise in dem Zwischenraum 46a angeordnet. Das Innengehäuseteil 44a weist eine Ausnehmung (nicht dargestellt) auf. In dem montierten Zustand greift das Verbindungselement 58a durch die Ausnehmung des Innengehäuseteils 44a hindurch. Zwischen dem Verbindungselement 58a und einer seitlichen Begrenzung der Ausnehmung ist eine Dichtung angeordnet, welche ein Eindringen von in dem Lebensmittelaufnahmeraum 40a angeordneten Lebensmitteln in den Zwischenraum 46a im Wesentlichen verhindert.

Das Außengehäuseteil 42a besteht zu einem Großteil aus einem nichtmetallischen Material. In dem Betriebszustand berührt ein Teil des Außengehäuseteils 42a die Kochfeldplatte 12a. Das Innengehäuseteil 44a besteht zu einem Großteil aus einem ferromagnetischen Material. In dem Betriebszustand ist das Innengehäuseteil 44a zu einer Erhitzung durch die Heizelemente 48a vorgesehen. Die Heizelemente 48a sind dazu vorgesehen, das Innengehäuseteil 44a mittels eines elektromagnetischen Wechselfelds zu erhitzen.

Das Außengehäuseteil 42a ist in dem Betriebszustand dazu vorgesehen, ein von den Heizelementen 48a bereitgestelltes elektromagnetisches Wechselfeld im Wesentlichen unverändert passieren zu lassen. In dem Betriebszustand ist das Außengehäuseteil 42a dazu vorgesehen, das von der Antriebseinheit 14a bereitgestellte Magnetfeld im Wesentlichen ungehindert passieren zu lassen.

Im Folgenden wird zunächst das zweite Gargeschirr 30a beschrieben (vgl. Fig. 4). Hierbei wird die Bezeichnung "zweites" der Einfachheit halber weggelassen. Das Gargeschirr 30a weist eine Gargeschirrgehäuseeinheit 68a auf. Die Gargeschirrgehäuseeinheit 68a weist ein Begrenzungselement 70a auf. Das Begrenzungselement 70a definiert den Lebensmittelaufnahmeraum 40a. Das Begrenzungselement 70a besteht zu einem Großteil aus einem nichtferromagnetischen Material. Im vorliegenden Ausführungsbeispiel besteht das Begrenzungselement 70a zu einem Großteil aus einem metallischen Material.

Die Gargeschirrgehäuseeinheit 68a weist ein Erhitzungselement 72a auf. In dem montierten Zustand sind das Begrenzungselement 70a und das Erhitzungselement 72a aneinander befestigt. Ein Teil des Erhitzungselements 72 berührt in dem Betriebszustand die Kochfeldplatte 12a. In dem montierten Zustand ist das Erhitzungselement 72a an einem Boden des Begrenzungselements 70a befestigt. Das Erhitzungselement 72a weist eine im Wesentlichen ringförmige Gestalt auf.

Das Erhitzungselement 72a begrenzt eine Zugangsausnehmung. Die von dem Erhitzungselement 72a begrenzte Zugangsausnehmung ist dazu vorgesehen, das von der Antriebseinheit 14a bereitgestellte Magnetfeld in dem Betriebszustand im Wesentlichen ungehindert passieren zu lassen. In dem Betriebszustand ist das Begrenzungselement 70a dazu vorgesehen, das von der Antriebseinheit 14a bereitgestellte Magnetfeld im Wesentlichen ungehindert passieren zu lassen.

Das Erhitzungselement 72a besteht zu einem Großteil aus einem ferromagnetischen Material. In dem Betriebszustand ist das Erhitzungselement 72a zu einer Erhitzung durch die Heizelemente 48a vorgesehen. Die Heizelemente 48a sind dazu vorgesehen, das Erhitzungselement 72a mittels eines elektromagnetischen Wechselfelds zu erhitzen. Das Begrenzungselement 70a ist in dem Betriebszustand zu einer Erhitzung durch das Erhitzungselement 72a vorgesehen. Das Begrenzungselement 70a begrenzt den Lebensmittelaufnahmeraum 40a.

In dem Betriebszustand ist die Lebensmittelbearbeitungseinheit 32a innerhalb des Lebensmittelaufnahmeraums 40a des Gargeschirrs 30a angeordnet. Die Lebensmittelbearbeitungseinheit 32a berührt in dem Betriebszustand das Begrenzungselement 70a. In dem Betriebszustand hält die Antriebseinheit 14a die Lebensmittelbearbeitungseinheit 32a mittels des von der Antriebseinheit 14a bereitgestellten Magnetfelds im Wesentlichen an einer Position in dem Lebensmittelaufnahmeraum 40a.

Im vorliegenden Ausführungsbeispiel ist die Lebensmittelbearbeitungseinheit 32a als eine Rühreinheit ausgebildet. Die Lebensmittelbearbeitungseinheit 32 ist dazu vorgesehen, innerhalb des Lebensmittelaufnahmeraums 40a angeordnetes Lebensmittel zu verrühren.

Die Kochfeld-Bedieneinheit 52a ist zu einer Eingabe einer Rotationsgeschwindigkeit der Lebensmittelbearbeitungseinheit 32a vorgesehen (vgl. Fig. 5). Im vorliegenden Ausführungsbeispiel weist die Kochfeld-Bedieneinheit 52a ein berührungsempfindliches Bedienelement zu einer Eingabe der Rotationsgeschwindigkeit der Lebensmittelbearbeitungseinheit 32a auf. Die Kochfeld-Bedieneinheit 52a weist eine Anzeigeeinheit auf. Die Kochfeld-Bedieneinheit 52a stellt einem Bediener eine Auswahl an Rotationsgeschwindigkeiten mittels der Anzeigeeinheit zur Verfügung. Die Anzeigeeinheit ist dazu vorgesehen, eine von einem Bediener ausgewählte Rotationsgeschwindigkeit vergrößert darzustellen.

Die Kochfeld-Steuereinheit 50a steuert in Abhängigkeit von einer Bedieneingabe mittels der Kochfeld-Bedieneinheit 52a die Antriebseinheit 14a zu einer Steuerung der Rotationsgeschwindigkeit der Lebensmittelbearbeitungseinheit 32a an.

In Fig. 8 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 7 verwiesen werden kann. Zur Unterscheidung der Ausführungsbeispiele ist der Buchstabe a in den Bezugszeichen des Ausführungsbeispiels in den Fig. 1 bis 7 durch den Buchstaben b in den Bezugszeichen des Ausführungsbeispiels der Fig. 8 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 7 verwiesen werden.

Fig. 8 zeigt eine Antriebseinheit 14b einer alternativen Kochfeldvorrichtung 10b. Die Antriebseinheit 14b ist in einer Einbaulage unterhalb einer Kochfeldplatte 12b der Kochfeldvorrichtung 10b angeordnet. In einem Betriebszustand stellt die Antriebseinheit 14b ein im Wesentlichen um eine Drehachse 16b rotierendes Magnetfeld oberhalb der Kochfeldplatte 12b zu einem Antrieb eines Verbrauchers 18b, 54b bereit.

Die Antriebseinheit 14b weist mehrere Elektromagnete 20b auf. Der Einfachheit in der Darstellung halber weist die Antriebseinheit 14b im vorliegenden Ausführungsbeispiel drei Elektromagnete 20b auf. In einer alternativen Ausgestaltung könnte die Antriebseinheit eine andere, insbesondere eine höhere Anzahl an Elektromagnete aufweisen. In einem montierten Zustand sind die Elektromagnete 20b um die Drehachse 16b herum angeordnet. Die Elektromagnete 20b sind in dem montierten Zustand gleichmäßig und im Wesentlichen in einer Ebene um die Drehachse 16b herum angeordnet. In der Ebene sind die Elektromagnete 20b ausgehend von der Drehachse 16b um einen Winkel von im Wesentlichen 120° um die Drehachse 16b herum angeordnet.

In einem Betriebszustand ist eine Kochfeld-Steuereinheit 50b dazu vorgesehen, die Elektromagnete 20b anzusteuern. Die Kochfeld-Steuereinheit 50b betreibt in dem Betriebszustand die Elektromagnete 20b. In dem Betriebszustand steuert die Kochfeld-Steuereinheit 50b die Elektromagnete 20b mittels Pulsweitenmodulation an. Im Falle einer Anzahl an drei Elektromagneten 20b steuert die Kochfeld-Steuereinheit 50b die Elektromagnete 20b mit um im Wesentlichen 120° phasenversetzten Signalen an. Die Elektromagnete 20b stellen in Abhängigkeit einer Ansteuerung durch die Kochfeld-Steuereinheit 50b das im Wesentlichen um die Drehachse 16b rotierende Magnetfeld oberhalb der Kochfeldplatte 12b zu dem Antrieb des Verbrauchers 18b, 54b bereit.

Die Antriebseinheit 14b ist frei von beweglichen Teilen. In dem Betriebszustand treibt die Antriebseinheit 14b ein Weiterleitungselement 36b des Verbrauchers 18b, 54b an.

### Bezugszeichen

- 10: Kochfeldvorrichtung
- 12: Kochfeldplatte
- 14: Antriebseinheit
- 16: Drehachse
- 18: Verbraucher
- 20: Elektromagnet
- 22: Permanentmagnet
- 24: Elektromotor
- 26: Kochsystem
- 28: Gargeschirr
- 30: Gargeschirr
- 32: Lebensmittelbearbeitungseinheit
- 34: Bearbeitungswerkzeug
- 36: Weiterleitungselement
- 38: Gehäuseeinheit
- 40: Lebensmittelaufnahmeraum
- 42: Außengehäuseteil
- 44: Innengehäuseteil
- 46: Zwischenraum
- 48: Heizelement
- 50: Kochfeld-Steuereinheit
- 52: Kochfeld-Bedieneinheit
- 54: Verbraucher
- 56: Welle
- 58: Verbindungselement
- 60: Erster magnetischer Pol
- 62: Zweiter magnetischer Pol
- 64: Erster magnetischer Pol
- 66: Zweiter magnetischer Pol
- 68: Gargeschirrgehäuseeinheit
- 70: Begrenzungselement
- 72: Erhitzungselement
- 74: Koppelelement

## Patentansprüche

1. Kochsystem (26a-b) mit zumindest einer Kochfeldvorrichtung, welche eine Kochfeldplatte (12a-b) und zumindest eine Antriebseinheit (14a-b) aufweist, welche in einer Einbaulage unterhalb der Kochfeldplatte (12a-b) angeordnet und dazu vorgesehen ist, in wenigstens einem Betriebszustand ein wenigstens im Wesentlichen um zumindest eine Drehachse (16a-b) rotierendes Magnetfeld oberhalb der Kochfeldplatte (12a-b) zu einem Antrieb zumindest eines Verbrauchers (18a-b) bereitzustellen, und mit zumindest einem Gargeschirr (28a-b), welches zumindest den Verbraucher (18a-b) aufweist, wobei der Verbraucher (18a-b) als eine Lebensmittelbearbeitungseinheit (32a-b) ausgebildet ist, wobei die Lebensmittelbearbeitungseinheit (32a-b) zumindest ein Bearbeitungswerkzeug (34a-b) und zumindest ein Weiterleitungselement (36a-b) aufweist, **dadurch gekennzeichnet, dass** das Gargeschirr (28a-b) zumindest eine Gehäuseeinheit (38a) aufweist, welche zumindest ein einem Lebensmittelaufnahmeraum abgewandtes Außengehäuseteil (42a) und zumindest ein dem Lebensmittelaufnahmeraum zugewandtes Innengehäuseteil (44a) aufweist, welche einen Zwischenraum (46a) definieren, und dass in dem Zwischenraum (46a-b) zumindest das Weiterleitungselement (36a-b) der Lebensmittelbearbeitungseinheit (32a-b) in dem Betriebszustand wenigstens teilweise angeordnet ist.

2. Kochsystem (26a-b) nach Anspruch 1, **dadurch gekennzeichnet, dass** die Antriebseinheit (14a-b) zumindest zwei Elektromagnete (20a-b) aufweist, welche in wenigstens einem montierten Zustand um die Drehachse (16a-b) herum angeordnet sind.

3. Kochsystem (26a-b) nach einem der vorhergehenden Ansprüche, **dadurch gekennzeichnet, dass** die Antriebseinheit (14a) zumindest einen Permanentmagneten (22a) aufweist, welcher in wenigstens einem montierten Zustand um die Drehachse (16a) rotierbar gelagert und in wenigstens einem Betriebszustand zu einer Bereitstellung des Magnetfelds vorgesehen ist.

4. Kochsystem (26a-b) nach Anspruch 2 und 3, **dadurch gekennzeichnet, dass** die Antriebseinheit (14a) zumindest einen Elektromotor (24a) aufweist, welcher die Elektromagnete (20a) aufweist und zu einem Antrieb des Permanentmagneten (22ä) vorgesehen ist.

5. Kochsystem (26a-b) nach Anspruch 1 oder 2, **dadurch gekennzeichnet, dass** die Antriebseinheit (14b) frei von beweglichen Teilen ist.

6. Kochsystem (26a-b) nach einem der vorhergehenden Ansprüchen, **dadurch gekennzeichnet, dass** das Weiterleitungselement (36a-b) dazu vorgesehen ist, das von der Antriebseinheit (14a-b) bereitgestellte Magnetfeld in eine Rotationsbewegung umzuwandeln und an das Bearbeitungswerkzeug (34a-b) weiterzuleiten.

7. Kochsystem (26a-b) nach einem der vorhergehenden Ansprüchen, **dadurch gekennzeichnet, dass** das Bearbeitungswerkzeug (34a-b) in dem Betriebszustand in dem Lebensmittelaufnahmeraum (40a-b) des Gargeschirrs (28a-b) angeordnet ist.

## Claims

1. Cooking system (26a-b) with at least one hob device, which has a hotplate (12a-b) and at least one drive unit (14a-b), which, in an installation position, is arranged below the hotplate (12a-b) and is provided, in at least one operating state, to supply a magnetic field which rotates at least essentially about at least one axis of rotation (16a-b) above the hotplate (12a-b) for driving at least one load (18a-b) and with at least one item of cookware (28a-b) which has at least the load (18a-b), wherein the load (18a-b) is embodied as a food processing unit (32a-b), wherein the food processing unit (32a-b) has at least one processing tool (34a-b) and at least one forwarding element (36a-b), **characterised in that** the item of cookware (28a-b) has at least one housing unit (38a), which has at least one outer housing part (42a) facing away from a food accommodating compartment and at least one inner housing part (44a) facing the food accommodating compartment, which define an intermediate space (46a) and that in the operating state at least the forwarding element (36a-b) of the food processing unit (32a-b) is arranged at least partially in the intermediate space (46a-b).

2. Cooking system (26a-b) according to claim 1, **characterised in that** the drive unit (14a-b) has at least two electromagnets (20a-b) which, in at least one assembled state, are arranged about the axis of rotation (16a-b).

3. Cooking system (26a-b) according to one of the preceding claims, **characterised in that** the drive unit (14a) has at least one permanent magnet (22a) which, in at least one assembled state, is mounted rotatably about the axis of rotation (16a) and in at least one operating state is provided to supply the magnetic field.

4. Cooking system (26a-b) according to claim 2 and 3, **characterised in that** the drive unit (14a) has at least one electric motor (24a) which has the electromagnets (20a) and is provided to drive the permanent magnets (22a).

5. Cooking system (26a-b) according to claim 1 or 2, **characterised in that** the drive unit (14b) is free of movable parts.

6. Cooking system (26a-b) according to one of the preceding claims, **characterised in that** the forwarding element (36a-b) is provided to convert the magnetic field provided by the drive unit (14a-b) into a rotational movement and to forward the same to the processing tool (34a-b).

7. Cooking system (26a-b) according to one of the preceding claims, **characterised in that** in the operating state the processing tool (34a-b) is arranged in the food accommodating compartment (40a-b) of the item of cookware (28a-b).

## Revendications

1. Système de cuisson (26a-b) avec au moins un dispositif de champ de cuisson présentant une plaque de cuisson (12a-b) et au moins une unité d'actionnement (14a-b), laquelle est disposée sous la plaque de cuisson (12a-b) dans un état monté et prévue afin de fournir dans au moins un état de fonctionnement un champ magnétique rotatif au moins essentiellement autour d'au moins un axe de rotation (16a-b) au-dessus de la plaque de cuisson (12a-b) pour un actionnement d'au moins un consommateur (18a-b), et avec au moins un élément de batterie de cuisine (28a-b) présentant au moins le consommateur (18a-b), dans lequel le consommateur (18a-b) est exécuté sous la forme d'une unité de préparation de denrées alimentaires (32a-b), dans lequel l'unité de préparation de denrées alimentaires (32a-b) présente au moins un outil de traitement (34a-b) et au moins un élément de transmission (36a-b), **caractérisé en ce que** l'élément de batterie de cuisine (28a-b) présente au moins une unité de carcasse (38a), laquelle présente au moins une partie de carcasse extérieure (42a) dirigée à l'écart d'un espace d'accueil de denrées alimentaires et au moins une partie de carcasse intérieure (44a) dirigée vers l'espace d'accueil de denrées alimentaires, lesquelles définissent un espace intermédiaire (46a) et **en ce qu'**au moins l'élément de transmission (36a-b) de l'unité de préparation de denrées alimentaires (32a-b) est au moins partiellement disposé dans l'espace intermédiaire (46a-b) dans l'état de fonctionnement.

2. Système de cuisson (26a-b) selon la revendication 1, **caractérisé en ce que** l'unité d'actionnement (14a-b) présente au moins deux électroaimants (20a-b), disposés autour de l'axe de rotation (16a-b) dans au moins un état monté.

3. Système de cuisson (26a-b) selon l'une des revendications précédentes, **caractérisé en ce que** l'unité d'actionnement (14a) présente au moins un aimant permanent (22a) logé en rotation autour de l'axe de rotation (16a) dans au moins un état monté et prévu pour la fourniture du champ magnétique dans au moins un état de fonctionnement.

4. Système de cuisson (26a-b) selon la revendication 2 et 3, **caractérisé en ce que** l'unité d'actionnement (14a) présente au moins un moteur électrique (24a), lequel présente les électroaimants (20a) et est prévu pour un actionnement de l'aimant permanent (22a).

5. Système de cuisson (26a-b) selon la revendication 1 ou 2, **caractérisé en ce que** l'unité d'actionnement (14b) est exempte de pièces mobiles.

6. Système de cuisson (26a-b) selon l'une des revendications précédentes, **caractérisé en ce que** l'élément de transmission (36a-b) est prévu afin de convertir le champ magnétique fourni par l'unité d'actionnement (14a-b) en un mouvement rotatif et de le transmettre à l'outil de traitement (34a-b).

7. Système de cuisson (26a-b) selon l'une des revendications précédentes, **caractérisé en ce que** l'outil de traitement (34a-b) est disposé dans l'état de fonctionnement dans l'espace d'accueil de denrées alimentaires (40a-b) de l'élément de batterie de cuisine (28a-b).
